Europäisches Patentamt

European Patent Office

Office européen des brevets

(11) Publication number: **0 302 543**
A1

# (12) EUROPEAN PATENT APPLICATION

(21) Application number: **88201497.0**

(22) Date of filing: **13.07.88**

(51) Int. Cl.⁴: **B65B 5/06 , B65G 47/82**

(30) Priority: **29.07.87 NL 8701795**

(43) Date of publication of application:
**08.02.89 Bulletin 89/06**

(84) Designated Contracting States:
**AT BE CH DE ES FR GB GR IT LI LU NL SE**

(71) Applicant: **Prakken, Bouwe**
**Spijkerlaan 9**
**NL-3471 EG Kamerik(NL)**

(72) Inventor: **Prakken, Bouwe**
**Spijkerlaan 9**
**NL-3471 EG Kamerik(NL)**

(74) Representative: **Baarslag, Aldert D. et al**
**Nederlandsch Octrooibureau Johan de**
**Wittlaan 15 P.O. Box 29720**
**NL-2502 LS Den Haag(NL)**

(54) **Device for collecting bags in rows stacked on top of each other.**

(57) A device for collecting bags in rows stacked on top of each other to permit the highest possible packing level that is to say that the filled bags must be arranged in rows in which the bags must take up a position precisely overlapping each other and during the piling of the rows the bags must maintain this precise position. Therefore the device comprises a conveyor (1) for feeding in the bags, a delivery element (2) which is below the level of the conveyor (1), and which is provided with a section which extends at right angles to the direction of conveyance of the conveyor, and pushing means for pushing the bags from the delivery element in a direction at right angles to the direction of feed of the conveyor; further the device is provided with means for displacing the discharge section of the conveyor (1) and the delivery element (2) relative to each other and thereby depositing the fed-in bags accurately one behind the other on the delivery element, and the device also has at least one supporting plate (11a, 11b), vertically displaceable within the walls (40), and means (18) for displacing the supporting plate stepwise downwards, while the pushing means (12, 13) are designed to push a single of bags at the time from the delivery element (2) onto the supporting plate (1a, 11b), and the means (18) for vertically displacing the supporting plate are designed to displace the supporting plate downwards a height of a row of bags after receiving a row of bags.

Fig-2

## Device for collecting bags in rows stacked on top of each other.

The invention relates to a device for collecting bags in rows stacked on top of each other.

In order to permit the highest possible packing level in an outer with filled bags, for example bags filled with nuts or crisps, the filled bags must be arranged in rows in which the bags take up a position precisely overlapping each other. During the formation of a row of bags directly in an outer or container or on a plate, the height from which the bags fall from the supply container onto the bottom of the outer or container or onto the plate is often so great that the bags do not take up the desired precise position.

US-A-1942555 discloses a machine for packing rectangular articles into boxes, comprising a conveyor for feeding in the articles, a delivery element which is below the level of the conveyor and which is provided with a section which extends at the right angles to the direction of conveyance of the conveyor, and pushing means for pushing the bags from the delivery element in a direction at right angles to the direction of feed of the conveyor. In such a machine the height of fall of the articles is limited. The articles will take their position in a row by being pushed forward by a next article and the rows of articles are formed directly on top of each other. Such a machine is unsuitable for collecting flexible filled bags so that they take up a precise position in a stack of rows.

The object of the invention is to solve this problem.

Therefore a device for collecting bags in rows stacked on top of each other comprising a conveyor for feeding in the bags, a delivery element which is below the level.of the conveyor, and which is provided with a section which extends at right angles to the direction of conveyance of the conveyor, and pushing means for pushing the bags from the delivery element in a direction at right angles to the direction of feed of the conveyor is characterized in that the device is also provided with means for displacing the discharge section of the conveyor and the delivery element relative to each other and thereby depositing the fed-in bags accurately one behind the other on the delivery element, and the device also has at least one supporting plate, vertically displaceable within walls, and means for displacing the supporting plate stepwise downwards, while the pushing means are designed to push a single row of bags at a time from the delivery element onto the supporting plate, and the means for vertically displacing the supporting plate are designed to displace the supporting plate downwards the height of a row of bags after receiving a row of bags.

The height of fall can be limited to a minimum if the delivery·element has two or more strips which are roughened or provided with teeth on the top edge, and which are vertically displaceable through slits in a smooth plate between a position projecting above the face of the smooth plate and a position below that face.

In a simpler design, the delivery face comprises two or more fixed strips provided on the top edge with teeth, while the pushing means comprise a pushing plate having on the bottom edge teeth which are complementary to the teeth on the top edge of the said strips.

It is also possible for the delivery face to consist of a mat with slits in the direction of displacement of the pushing means.

The conveyor for feeding in the bags is preferably a telescopic belt.

The invention will now be explained with reference to the figures, which show an example of an embodiment of a device for collecting a row of accurately positioned filled bags, for stacking the rows on top of each other and for filling outers with rows of filled bags.

Fig. 1 shows schematically a perspective view of the front of the cut-away device.

Fig. 2 shows a front view of the section which collects the bags into rows, in the position in which a row is being formed.

Fig. 3 shows the same front view, but in the position in which a collected row is being pushed away.

Fig. 4 shows in perspective an alternative embodiment of the collecting device.

Fig. 5 shows in perspective yet another embodiment of the collecting device.

Fig. 6 shows in perspective a view of the rear side of a part of the device.

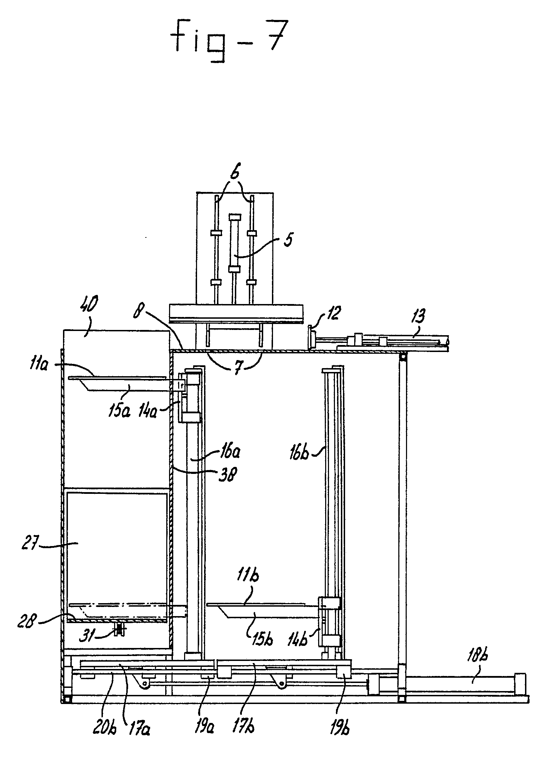

Fig. 7 shows a vertical section through the device.

Fig. 8 shows a top view of a part of the device.

The device shown is intended for collecting filled bags into rows in such a way that they overlap each other precisely, and for taking these rows into an outer in such a way that the maximum degree of filling of the outer is achieved.

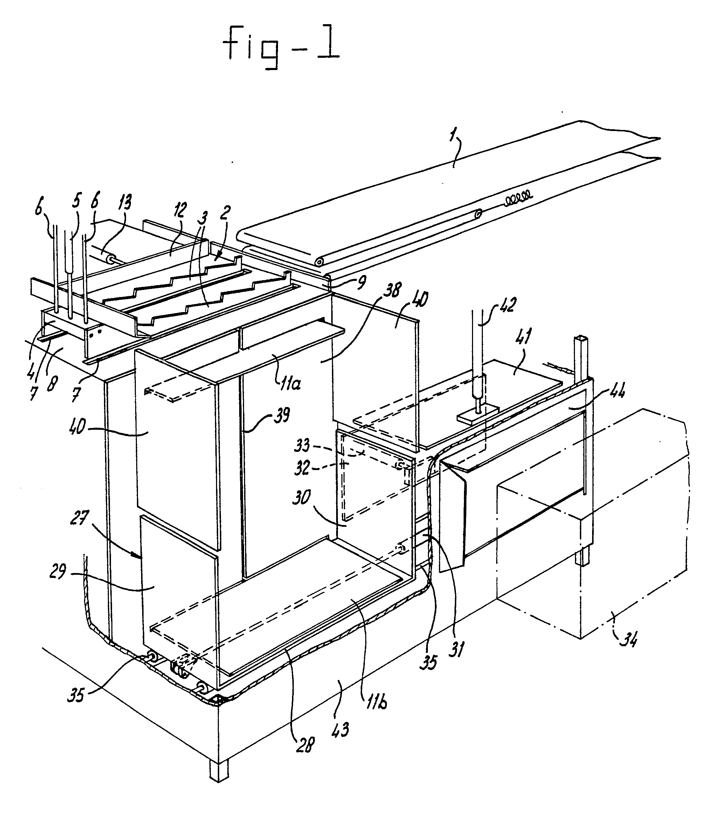

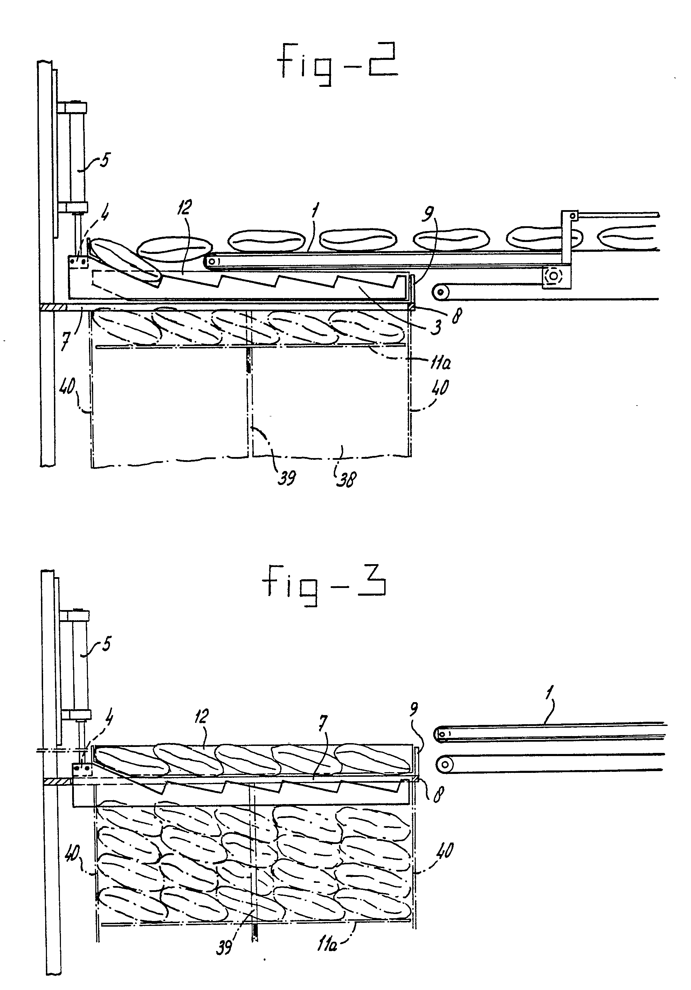

For the infeed of filled bags, use is made of a feed conveyor 1, the discharge end of which is displaceable by a so-called telescopic construction, known per se, between an extended position and a retracted position (compare Figures 2 and 3). As Fig. 2 shows, the bags are delivered by the retracting discharge end of the conveyor 1 to a delivery element 2, which in Fig. 1 consists of two parallel strips 3 which are provided with teeth on the top edge, and which are attached some distance from each other to a connecting tube 4 which can be moved up and down by a pneumatic cylinder 5. Two rods 6 are used for guidance. When the piston rod of the cylinder 5 is pushed out, the strips 3 are moved downwards, thereby moving through slits 7 in a smooth plate 8. In the highest position of the strips 3 they receive the bags from the retracting discharge end of the conveyor 1. The teeth of the strips 3 ensure that the horizontal bags, which take up a position precisely overlapping each other, cannot slip away in the direction in which they have been fed in by the conveyor.

Once a row of bags has been collected, the strips 3 are moved down, so that the row of collected bags comes to rest on the smooth plate 8. Displacement of the bags in the lengthwise direction of the row is prevented by an upright edge 9.

In this position the row of bags must be transferred to one of two supporting plates 11a, 11b. For this transfer, use is made of a pushing plate 12, which is operated by a pneumatic cylinder 13.

The main advantage of the construction discussed until now is that the teeth of the strips 3 are a very short distance below the discharge end of the conveyor 1 during receiving of the filled bags (see Fig. 2). The bags can be deposited by the conveyor 1 extremely accurately on the strips 3, and a row of bags can be pushed by the pushing means 12, 13, without any change in the relative positions of the bags, onto a supporting plate 11a or 11b (see Fig. 3).

The embodiment according to Fig. 4 differs from that according to Figs. 2 and 3 in that the strips 3a of the delivery element 2 are not movable up and down and the pushing element 12a is provided on the bottom edge with teeth which are complementary to the teeth in the top edge of the strips 3a. A row of collected bags can be pushed by the pushing element 12a from the teeth of the strips 3a. The resistance in the pushing direction is much lower than in the lengthwise direction of the strips 3a.

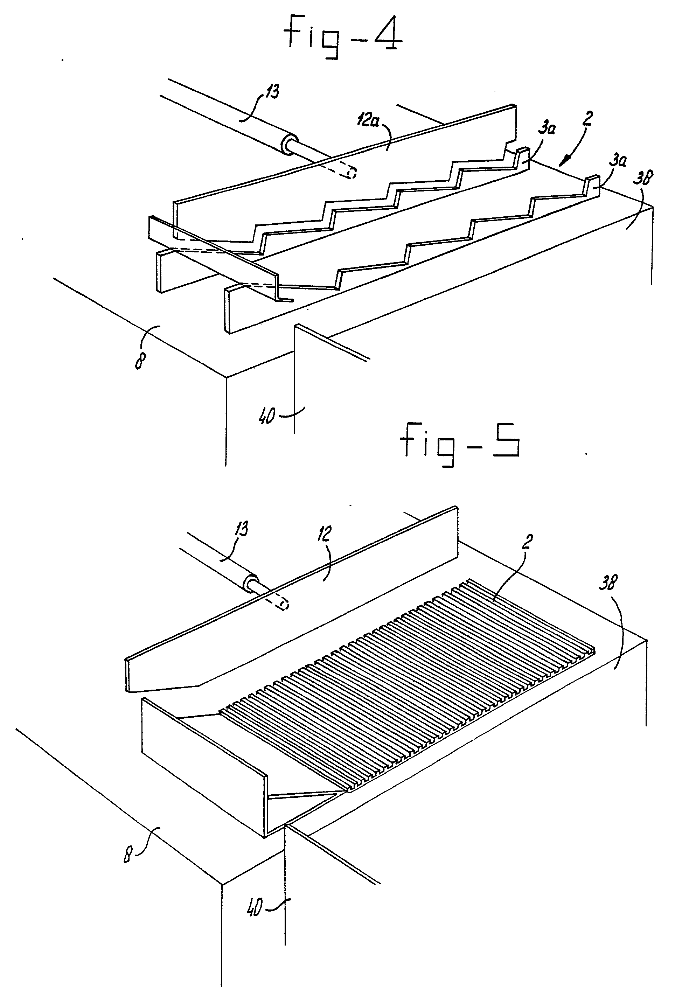

Fig. 5 differs from Fig. 4 in that the delivery element 2 consists of a mat (for example, a rubber mat) provided with slits which extend in the direction of movement of the pushing element 12, and which thus cause no extra resistance to slipping in that direction, while in the direction at right angles to the slits they do cause extra resistance to slipping.

The embodiment according to Figs. 2 and 3 is more complex than that according to Figs. 4 and 5, but it works better because the friction caused by the plate 8 when a row of bags slips off the plate can be kept to a minimum. Nevertheless, the embodiments according to Figs. 4 and 5 also work satisfactorily.

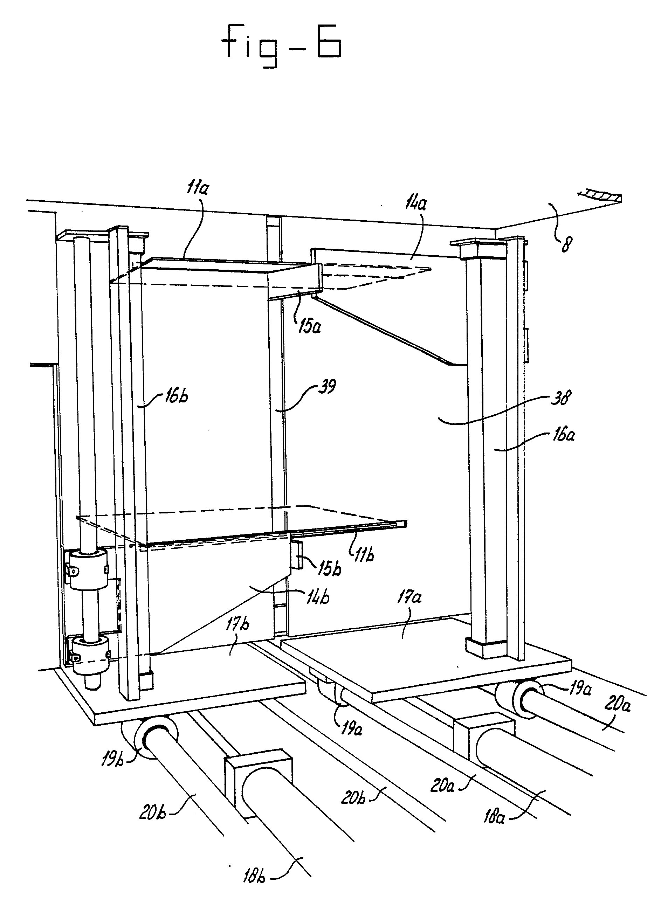

Fig. 6 shows that each of the supporting plates 11a, 11b is connected by means of brackets 14a, 15a and 15a, 15b respectively to a vertically movable mechanism located in a tube 16a, 16b. Each of these tubes rests on a plate 17a, 17b which can be displaced horizontally by a pneumatic cylinder 18a, 18b, the joint action of guide eyes 19a, 19b connected to the plates 17a, 17b and fixed guide rods 20a, 20b ensuring that the movement of the plates is guided accurately.

The movement mechanism accommodated in the tube 16a, 16b for the vertical movement of the supporting plates 11a, 11b can consist of a chain driven by a stepping motor and connected to the bracket 14a, 14b. Another possibility is a lead screw with nut which is driven by a motor, and to which the bracket 14a, 14b is attached.

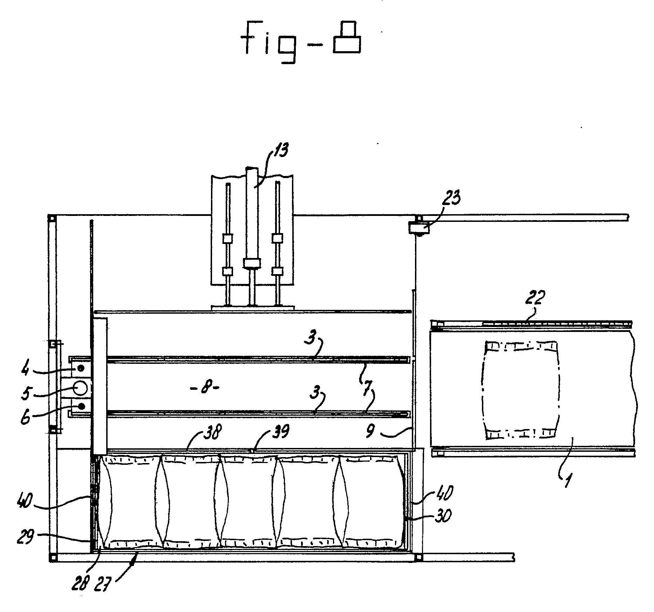

In order to make it possible for the discharge end of the conveyor 1 to be retracted stepwise over a settable distance which matches the length of the filled bags, as can be seen from Fig. 8, provision is made on the movable frame part of the conveyor for a toothed rod 22, while a unit 23 consisting of a light source and a photoelectric cell counts the number of teeth which may be passed during displacement of the discharge end of the conveyor before said end is brought to a standstill. Electronic control means (not shown) handle the desired operation of various parts of the device.

By means of the supporting plates 11a, 11b, the rows of bags are transferred in a manner to be described in greater detail to a cassette 27 which comprises a bottom 28 and two side walls 29, 30, and which can be moved to and fro by a pneumatic cylinder 31 between a receiving position, shown in Fig. 1, and an outer-filling position. In this latter position the cassette is located with its one open side in front of a pushing element 32 (operated by a pneumatic cylinder 33) and with its other open side in front of a tilted outer 34 which has been fed in. The cassette is guided by guide rods 35.

A partition 38 having an I-shaped cutout 39 is provided between the space accommodating the cassette 27 and the space accommodating the movement and guide mechanisms 14 to 20 for the plates 11a, 11b.

The device works according to the following cycle:

One of the two supporting plates 11a, 11b is pushed through the top·horizontal part of the I-shaped cutout 39 by one of the above-described movement mechanisms for the vertical and horizontal displacement of the supporting plate in question. A first row of bags is pushed by the pushing element 12 onto said plate 11a, which is in the top position. Whilst a second row of bags is being collected on the delivery element 2, the supporting plate in question moves approximately the height of a row of bags downwards, while a bracket 15a, 15b projects through the vertical part of the I-shaped cutout. The second row of bags is pushed by the pushing element 12 onto the first row, and this process of collecting the bags into a row and sliding that row onto the previous row continues until a desired number of rows of bags (for example, five rows) is stacked on top of each other.

The walls 40 directly above the side walls 29 of the cassette 27 ensure that the bags cannot slide away in the lengthwise direction of a row. The maximum number of rows of bags on a supporting plate 11a or 11b is reached when the supporting plate has reached approximately the bottom edge of the walls 40.

The electronic control means for the movement mechanisms of the supporting plates 11a and 11b are programmed in such a way that at this point the supporting plate in question with the rows of bags stacked on top of each other moves to the bottom 28 of the cassette 27 and is pulled backwards there via the bottom part of the I-shaped cutout, so that the rows of bags stacked on top of each other come to rest on the bottom of the cassette 27.

At the same time, the other supporting plate is pushed through the top part of the I-shaped cutout to receive a row of bags which has collected on the delivery element 2. While the desired number of rows is being stacked on the new supporting plate, the cassette 27 is moved from the receiving position shown in Fig. 1 to the outer-filling position. In that filling position the stack of bags arranged in rows is pressed in a vertical movement by means of a pressure plate 41 operated by a pneumatic cylinder 42.

The cylinder 33 is subsequently actuated, causing the stack to be pushed through an opening in the housing 43 into a tilted outer 34. Said opening in the housing is surrounded by slanting strips 44 which serve to retain the closing flaps of the tilted outer 34.

The cassette 27 is then moved back into the receiving position, the cycle being arranged in such a way that on the return of the cassette the relevant supporting plate 11a or 11b is loaded with the desired number of rows of bags. This supporting plate is pulled back again, so that the second stock of stacked bags is deposited on the bottom of the cassette.

This cycle is repeated until the desired number of stacked rows of bags has been pushed into an outer 34. The outer is then replaced by a new one. The full outer is tilted back into the vertical position, so that the bags placed horizontally in it end up being vertical, which gives better protection during transport. Handling of the filled bags before the outer is filled is, however, entirely in the horizontal position, so that an even distribution of the product in the bags in ensured.

The action of the device described leads to a combination of even distribution of the product in the bags, maximum filling of the outers, and a high filling capacity.

Various modifications of and alternatives to the above-described device are possible within the scope of the claims.

## Claims

1. Device for collecting bags in rows stacked on top of each other comprising a conveyor (1) for feeding in the bags, a delivery element (2) which is below the level of the conveyor (1), and which is provided with a section which extends at right angles to the direction of conveyance of the conveyor, and pushing means for pushing the bags from the delivery element in a direction at right angles to the direction of feed of the conveyor, characterized in that the device is also provided with means for displacing the discharge section of the conveyor (1) and the delivery element (2) relative to each other and thereby depositing the fed-in bags accurately one behind the other on the delivery element, and the device also has at least one supporting plate (11a, 11b), vertically displaceable within walls (40), and means (18) for displacing the supporting plate stepwise downwards, while the pushing means (12, 13) are designed to push a single row of bags at a time from the delivery element (2) onto the supporting plate (11a, 11b), and the means (19) for vertically displacing the supporting plate are designed to displace the supporting plate downwards the height of a row of bags after receiving a row of bags.

2. Device according to claim 1, characterized in that the delivery element (2) has two or more strips (3) which are roughened or provided with teeth on the top edge, and which are vertically displaceable through slits (7) in a smooth plate (8) between a projecting position above the face of the smooth plate and a position below that face.

3. Device according to claim 1, characterized in that the delivery face (2) comprises two or more fixed strips (3a) provided on the top edge with teeth, and the pushing means comprise a pushing plate (12a) having on the bottom edge teeth which are complementary to the teeth on the top edge of the said strips (3a).

4. Device according to claim 1, characterized in that the delivery face (2) consists of a mat with slits in the direction of displacement of the pushing means (12, 13).

5. Device according to one of claims 1 to 3, characterized in that the conveyor (1) is a telescopic belt.

# fig-1

Fig-2

Fig-3

Fig-4

Fig-5

fig-6

# fig-7

Fig-8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,Y | US-A-1 942 555 (KIMBALL)<br>* Page 2, lines 3-41,118-137; figures 1-3,5-7 * | 1,3,5 | B 65 B 5/06<br>B 65 G 47/82 |
| Y | EP-A-0 111 446 (STOX)<br>* Page 5, line 11 - page 9, line 7; figures 1-3 * | 1,3,5 | |
| Y | US-A-4 222 478 (SIG)<br>* Figure 3 * | 5 | |
| A | US-A-3 996 723 (JONES)<br>* Column 4, line 32 - column 5, line 45; figures 1-14 * | 1 | |
| A | GB-A- 882 092 (UNILEVER)<br>* Page 1, line 67 - page 2, line 9; figures 1,2 * | 1 | |
| A | DE-B-1 224 646 (SIGRIST)<br>* Column 3, line 16 - column 4, line 20; figures 1,4 * | 4 | TECHNICAL FIELDS SEARCHED (Int. Cl.4)<br><br>B 65 B<br>B 65 G |

The present search report has been drawn up for all claims

| Place of search | Date of completion of the search | Examiner |
|---|---|---|
| THE HAGUE | 03-11-1988 | CLAEYS H.C.M. |

EPO FORM 1503 03.82 (P0401)